# EUROPEAN PATENT APPLICATION

(11) **EP 1 913 806 A2**
(43) Date of publication of application: **23.04.2008**
(21) Application number: 06807917.7
(22) Date of filing: 10.08.2006
(51) Int. Cl.: A01G 1/00, B44C 5/06

(54) **ARTIFICIAL LANDSCAPE AS A NOVEL COMMUNICATION FORMAT**

(30) Priority: 11.08.2005 ES 200502026
(71) Applicant: TORRES RICO, Alvaro Fernando, 41940 Tomares Sevilla (ES)
(72) Inventor: TORRES RICO, Alvaro Fernando, 41940 Tomares Sevilla (ES)
(74) Representative: Lehmann Novo, Maria Isabel
(86) International application number: PCT/ES2006/000472
(87) International publication number: WO 2007/017547

(57) **Abstract**

The present invention refers to the realisation of a novel format of communication through the alteration and/or modification and/or substitution and/or creation of the characteristics of the elements constituting a landscape or of the same in its entirety having the objective of communication, providing for the realisation of said alterations, modifications, substitutions or creations, the employment of different techniques such as the use of agricultural techniques or techniques from the field of silviculture; having provided the addition of new elements in the landscape together with the alteration and/or modification and/or substitution and/or creation of the topographical characteristics, together with the projection or representation on all or part of the area of a landscape or in new elements added thereto, of images, figures or any means of representation, whether of a temporary nature or otherwise achieving the effects cited.

## Description

The object of the present invention is the establishment or determination of a novel format of communication created by means of the transformation of all or part of the assembly of elements comprising a previous/basic landscape giving rise to an artificial landscape, all the foregoing having the objective of transmitting a predefined message.

A format of communication is the set of technical and presentational characteristics of a media. The format as such is not solely the material support acted upon but rather such definition includes in addition technical characteristics such as extent, dimensions, proportions, elements constituting it or possibilities of representation of information characteristic of each format together with the means of expression making it possible.

In accordance with this definition a periodical publication having given technical characteristics (such as the type of paper whereon it is published, the size and the number of sheets therein included) and the means of expression they make possible will correspond to the characteristics of different formats of communication such as a newspaper, a specialised magazine or publicity support. Another example of format of communication are the external hoardings which, being a format of communication, possess their particular technical and presentational characteristics permitting different and varied means of expression, the latter in turn making possible the different forms of presenting information characteristic of this format of communication. Other examples of different formats are those utilised in media such as television or radio wherein the characteristics of dimension and elements constituting them together with the possibilities of expression offered by the latter establish the differences between said formats, the material support being of secondary importance. Older formats of communication such as clay tablets, Egyptian papyri or incunables also have differentiating details in their particular technical and presentational characteristics.

As may be deduced from the title of this patent the landscape constitutes a fundamental element in the object of the present invention. It is well known that the landscape is an element of the natural world, a combination of territory (visible and biological factors) and of human action being perceived or internalised, valuing aspects such as aesthetics, scarcity, historic or cultural interest, scientific or ecological value, irreplaceability and fragility and others. It is an unrenewable natural resource and generally of difficult reversibility.

The dictionary of the Royal Academy of the Spanish Language defines the landscape as 'expanse of terrain seen from a location' and as 'painting or drawing representing a certain expanse of terrain'. These definitions are indicative of the generally-accepted traditional concept of landscape.

The Microsoft® Encarta Encyclopaedia defines landscape as geosystem, a concept arising from the application of systems theory to landscape studies carried out in geography. In accordance therewith landscapes are the result of the interaction of their component elements which same, in turn, constitute lesser systems or subsystems.

A geosystem is constituted by a geome or abiotic subsystem (lithomass, aeromass and hydromass), a biome or ecosystem (biomass) and economic subsystem representing the effects of anthropic action. These subsystems do not occur in an isolated manner but maintain multiple interrelationships between them yielding as result the different landscapes constituting the territorial expression of a geosystem.

The geosystem is a theoretical model in the same way as the ecosystem for biologists, implying that the elements of the land surface appear in an integrated manner forming assemblies for which reason their analysis must be carried out without breaking them down into their component elements but concentrating the attention more on the interrelationships which the interpretation of the facts permits. A landscape wherein the economic subsystem is absent corresponds to a natural geosystem (mountain chain, the Antarctic territories), thus a woodland would correspond to a biotic geosystem, whilst a farmed field would correspond to an anthropic geosystem. In this manner, in accordance with the geosystem constituting it, a landscape may be natural, abiotic, biotic or anthropic.

In cultural terms or terms centred around human influence, the landscape may be defined as 'The stage of human activity' (Laurie, 1970) and as 'A natural medium strongly conditioned by socioeconomic activities appears as landscape to man's eyes, transformed by sociocultural factors' (Perelman, 1977). Some other definitions in this sense are 'Result of man's action on adjacent nature' by Caldeira Cabral (1977) and also 'The landscape exists while man perceives it. Without man nothing more than Nature would exist' by Maciá Antón (1994).

In studies on landscape the error may be committed of analysing the same break breaking it into its components and structure down to the smallest detail. This is due to the fact that in general it is not taken into account that for a real understanding of the landscape, as in the case of biology or medicine, for knowledge and comprehension thereof it is fundamental to apply a concept in terms of systems theory, considering the landscape to be as such, a complex structure which taken together has greater potentiality than the sum of its parts. As in the case of the human body or any living being, or complex systems of any kind, the landscape is much more than the sum of the elements constituting it.

### Sector of art

The novel format of communication object of the present patent must be included within the sector of the various technologies of communication.

### Prior art at the date of submission

In the prior art of techniques of communication the applicant is unaware of artificial realisations or actions on the landscape by means of agricultural techniques, silvicultural techniques, additions or subtractions of elements constituting the landscape, alteration of the topography or representations in the same the purpose whereof being to convert the landscape previously referred to into a format of communication but, on the contrary, is aware of those having merely aesthetic or artistic objectives.

### Brief summary of the invention

The object of the present invention consists of a novel use of the landscape as a format of communication artificially created by means of the alteration and/or modification and/or substitution and/or creation of the characteristics of the elements constituting a previous (or basic) landscape or of the latter in its entirety, all directed towards the above stated objective of communication.

The principal advantage deriving from the present invention of this novel format of communication is the creation of an original and novel means of communication having all the possibilities and advantages offered thereby.

### Preferred methods of embodiment

### Method of embodiment a).

Through the employment of agricultural techniques and/or silvicultural techniques the creation is possible of tonal and chromatic contrasts and of textures, reliefs and, in summary, any alteration and/or modification and/or substitution and/or creation of the characteristics of the elements constituting a landscape or of the latter in its entirety and permitting the representation of images, anamorphosis and other forms of representation in the format of artificial landscape having the objective of communication.

### Method of embodiment b).

Through the addition of new elements in the landscape, whether of a temporary nature or otherwise, achieving the alteration and/or modification and/or substitution and/or creation of the characteristics of the elements constituting a landscape or of the latter in its entirety having the objective of communication.

### Method of embodiment c).

Through the alteration and/or modification and/or substitution and/or creation of topographical characteristics, whether of a temporary nature or otherwise, of a landscape or of the latter in its entirety having the objective of communication.

### Method of embodiment d).

Through the projection or representation on all or part of the surface of a landscape, or in new elements added to the same, of images, forms or any means of representation, whether of a temporary nature or otherwise, achieving the alteration and/or modification and/or substitution and/or creation of the characteristics of the elements constituting a landscape or of the same in its entirety having the objective of communication.

### Brief description of the drawings

In the following, in terms of example and without being limitative, the invention will be described in greater detail making reference for the purpose to various examples of preferred embodiment of the same to be read together with the three figures appended wherein are shown three examples of embodiment between them combining the different methods of embodiment enumerated in the foregoing section.

### Description of various examples of embodiment

Having expounded the preferred methods of embodiment, in order to facilitate comprehension of the object of the present invention, in terms of examples and not being of a limitative nature, in the accompanying figures there are shown several practical examples of embodiment of the invention.

In all the accompanying illustrative examples, given the plurality and complexity of those which might be cited, we shall refer perhaps to the most elementary and practical notion within the intrinsic limitations of this document. Specifically, through the provisions of the object of the present patent are represented the addition and artificial alteration of elements of a landscape being prior to the intervention, converting it into a format of communication.

For the embodiment of these examples a landscape has been selected from an aerial viewpoint, specifically from an aeroplane during the manoeuvres of approaching or taking off from an airport. Such manoeuvres are characterised by parameters of speed, height, location and distance defining the viewpoint configuring the landscape to be acted upon. The dimension of the alteration requires to be proportional to that of the landscape in order for it not to be perceived as an alteration of one of its parts without the ability to modify the assemblage.

### Example 1

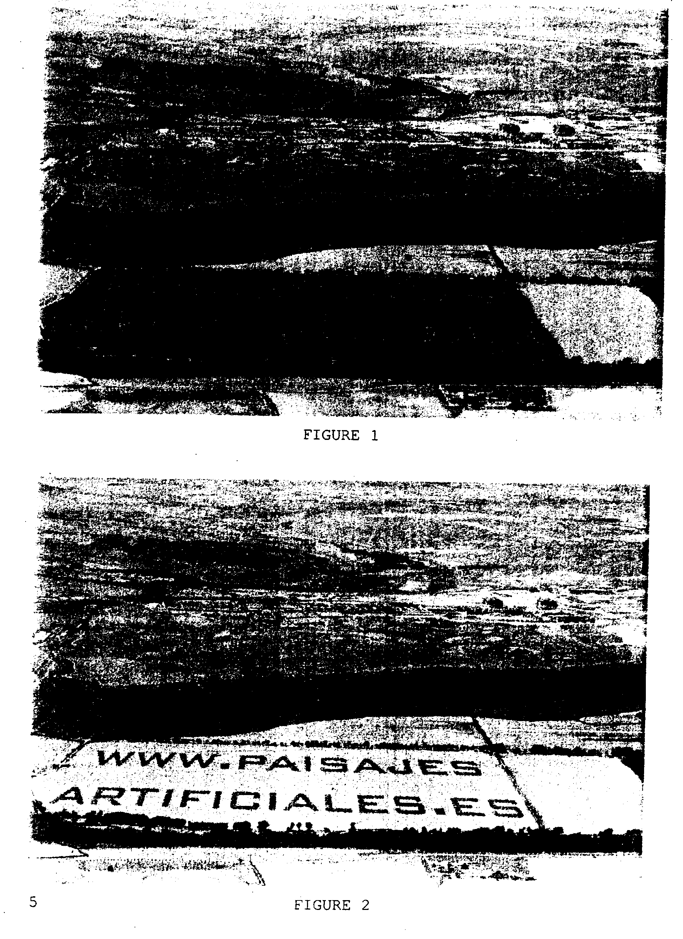

For the embodiment of this example shown in figure 1 there has been selected the communication or transmission of the address of a webpage written by means of a controlled succession of artificially-flooded stretches adopting the shape of letters.

In order to carry out such transformation it has been decided to select part of a landscape which due to its apparent uniformity, in chromatic, textural, contrast, etc, terms, permits the achievement of a greater communicative effect through the transformation of the same by means of the techniques described in the present patent. As an initial step levelling of the site will be preceded to in accordance with the requirements of the action, conferring on the levelled area the properties required in terms of gradient, number of platforms/shelves, etc. (Method of embodiment c)). Subsequently, following a pattern, the enlargement of a prior design will be marked upon the terrain. Such enlargement may be realised by very diverse means such as the graticulation of the terrain through any kind of measurement and/or location (such as for example by means of fixing points located by GPS (Global Positioning System)) and the subsequent transfer to the same of the prior design or alternatively graticulation to scale in accordance with the dimensions of the enlargement to be realised, passing through the projection of the prior design onto the terrain by means of luminous projections (taking into account the foreshortening or angle of projection required) or any other means making expression possible on the surface of the terrain of the design to be followed.

Having previously defined said design by means of furrows on the terrain there are executed on the aforementioned terrain a series of excavations by any conventional means which, in the form of channels or tanks, contain water or make it circulate having a depth sufficient for the objective sought of achieving flooded surfaces of a chromatic, tonal, textural and colour saturation spectrum contrasting with that of the terrain. (Method of embodiment b)). Finally it is sown with a plant species of colour differing from the surrounding terrain in order to achieve the desired contrast or chromatic combination (Method of embodiment a)).

The embodiment may also be realised by means of the positioning on the terrain of materials which due to their characteristics may be perceived as water from the viewpoint selected such as, for example, plastic or vitreous sheets having similar characteristics of reflection and colour as those of water surfaces in the landscape (Method of embodiment b)).

### Example 2

Figure 2 shows another example of embodiment wherein method of embodiment a) predominates. In this case the representation of the aforementioned message is carried out by means of the employment of agricultural techniques. The latter offer a broad scope of possibilities for acting such as the planting of different species of plant having different characteristics of appearance, the possibility of creating contrast with the terrain leaving part of the same unoccupied and another part covered with plant material. In addition the employment of farming techniques as an agricultural technique may produce the contrast required for the representation of communication and other agricultural techniques such as reaping the plant material, the different times of flowering of the same, etc.

For the execution of this particular example it has been chosen to carry out, in the same manner as in previous examples, the partial sowing of the terrain following a pattern, magnified from the prior design, having been marked out previously leaving the remainder free of vegetation in order to achieve in this manner the transformation of an element of the landscape and, as a consequence, of the landscape itself permitting in an obvious manner the communication of the selected message.

### Example 3

By means of techniques from the field of silviculture (method of embodiment a)) it may be proceeded in a manner similar to the previous example wherein agricultural techniques were employed. However in order to add greater clarity if possible to this example of embodiment there will be considered various possibilities offered by this technique. By means of techniques from the field of silviculture the representation of the message may be achieved utilising the possibilities of contrast which different plant species offer together with different characteristics of the same such as colour and flowering date, the deciduousness or otherwise of its foliar covering and as appropriate the timing thereof and its possible variations of aspect of said plant material. In addition other techniques such as pruning or felling vegetation are attractive in order to achieve the objective sought of representation of communication.

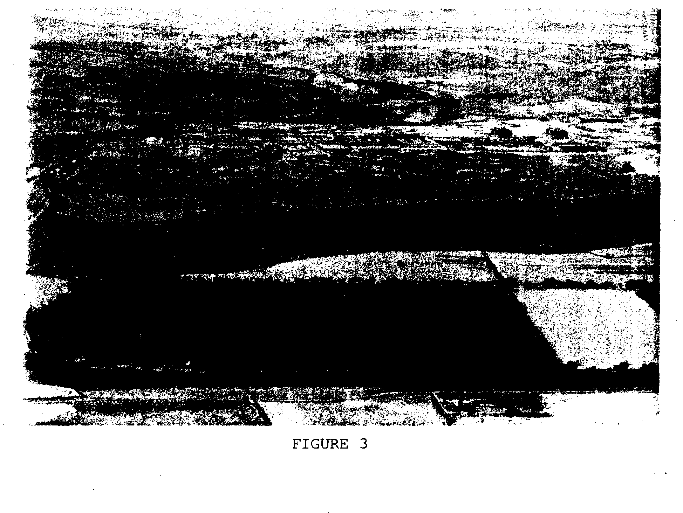

The example shown in figure 3 corresponds to a selective plantation of plant species following a design amplified from a previous design, in this manner transforming the landscape such that its different characteristics, specifically the aspect of the same in a given season of the year, permit the representation of the aforementioned message.

These partial alterations of the basic landscape, employing the possibilities of communication offered by the creation of artificial landscapes as a format of communication yield as a result an informative representation in said format. In effect a new landscape, being an entity greater than the sum of its parts, is the result of the alteration of one of the parts created artificially having the objective of communication, in the specific case of the previously described example having obvious informative utility.

The foregoing description depicted some of the essential characteristics of the invention. Nevertheless it will be understood that the invention also covers all the variants and modifications which may occur to experts in the field falling within the spirit and scope of the accompanying claims.

## Claims

1. Artificial landscape as a novel format of communication **characterised in that** the realisation of the present novel format of communication is established by means of the alteration and/or modification and/or substitution and/or creation of the characteristics of the elements constituting a landscape or of the same in its entirety having the objective of communication, utilising for the realisation of said alterations, modifications, substitutions or creations the employment of different techniques such as the employment of agricultural techniques or techniques from the field of silviculture to make possible the creation of tonal and chromatic contrasts together with those of texture, relief and specifically any transformation of the characteristics of the elements constituting a landscape or the same in its entirety permitting the representation of images, anamorphosis and other forms of representation in the format of artificial landscape, all the foregoing having the objective of communication; having provided the addition of new elements in the landscape, whether of a temporary nature or otherwise, together with the alteration and/or modification and/or substitution and/or creation of the topographical characteristics of the same, whether of a temporary nature or otherwise, and/or the projection or representation on all or part of the area of a landscape or in new elements added thereto of images, figures or any means of representation, whether of a temporary nature or otherwise, achieving the effects of communication cited.
